# EUROPÄISCHE PATENTANMELDUNG

(11) **EP 3 909 802 A1**
(43) Veröffentlichungstag der Anmeldung: **17.11.2021**
(21) Anmeldenummer: 21000131.9
(22) Anmeldetag: 12.05.2021
(51) Int. Cl.: B60L 5/26, B60L 5/24, B60L 9/00, B60L 53/16, B60L 53/35

(54) **SCHIENENGEBUNDENES ENERGIEVERSORGUNGSFAHRZEUG MIT STROMKUPPLUNGSEINHEIT ZUR ENERGIEVERSORGUNG EINES ELEKTROMOTORISCHEN TRIEBFAHRZEUGS**

(30) Priorität: 12.05.2020 DE 102020002925
(71) Anmelder: LibroDuct GmbH & Co. KG, 66125 Saarbrücken (DE)
(72) Erfinder: Messerschmidt, Jan, 66119 Saarbrücken (DE)

(57) **Zusammenfassung**

Die Erfindung gibt ein schienengebundenes, selbst fahrbares Energieversorgungsfahrzeug (2) an, aufweisend: einen Aufbau (7), mindestens eine im oder am Energieversorgungsfahrzeug (2) angeordnete elektrische Energieliefereinheit (3), die ausgebildet ist, ein elektromotorisches Triebfahrzeug (1), das über herkömmliche Kupplungen (6 und 6') gekuppelt ist, mit Traktionsenergie zu versorgen, und eine im Dachbereich über der primären Dachebene (5) des Aufbaus (7) angeordnete Stromkupplungseinheit (4), die ausgebildet ist, die elektrische Energie aus der Energieliefereinheit (3) an das elektromotorische Triebfahrzeug (1) zu übertragen.

Die Erfindung gibt auch eine Verwendung des Energieversorgungsfahrzeugs sowie ein Verfahren zum Betrieb des Energieversorgungsfahrzeugs an.

## Beschreibung

Schienengebundenes und eine elektrische Energieliefereinheit umfassendes Energieversorgungsfahrzeug zur Versorgung mit elektrischer Traktionsenergie eines elektromotorischen Triebfahrzeugs mit Stromkupplungseinheit in Ausprägung eines über eine Positionier-Mechanik beweglichen elektrisch leitfähigen Fangbügels.

### GEBIET DER ERFINDUNG

Die Erfindung betrifft ein schienengebundenes Energieversorgungsfahrzeug, eine Verwendung des Energieversorgungsfahrzeugs, einen Betrieb des Energieversorgungsfahrzeugs sowie eine zugehörige Anordnung.

### STAND DER TECHNIK

Im kommerziellen (öffentlichen wie auch privaten) Schienenverkehr ist in Europa, aber nicht nur dort, seit mindestens dem frühen 20. Jahrhundert die elektrische Traktion mit Oberleitung im Vormarsch. Gleichwohl gibt es nach wie vor viele Strecken, die nicht (durchgehend) elektrifiziert, d.h. mit Oberleitung (oder Stromschiene) ausgestattet, sind und die man trotzdem (aus Gründen der Ökologie wie der Ökonomie) gerne (durchgehend) elektrisch befahren möchte. Dazu gab es schon Ende des 19. Jahrhunderts erste Versuche mit Batterietriebwagen. In größerem Umfang wurden in Deutschland solche Triebwagen ab den 1950er Jahren zum Einsatz gebracht. Aufgrund sinkender Erdölpreise und damit besserer Wirtschaftlichkeit der Dieseltraktion verschwanden diese Lösungen nachfolgend aber wieder. Sie wurden durch Dieseltriebzüge ersetzt, sofern nicht die entsprechende Strecke elektrifiziert wurde, was jedoch vergleichsweise hohe Investitionen erfordert.

Eine ähnliche Problematik ergibt sich bei der Verlängerung von elektrifizierten Strecken um einen nicht elektrifizierten Streckenabschnitt.

Im Zuge der seit den 1970er Jahren verstärkt aufkommenden Diskussion um das Ende der fossilen Mobilität (d.h. der Ablösung von Fahrzeugen mit Verbrennungsmotor für fossile Kraftstoffe) ist das Interesse an elektrischen Lösungen auch für Strecken ohne (durchgehende) Elektrifizierung wieder gewachsen. Mittlerweile gibt es Lösungen mit Lithium-Ionen-Akkus, die wesentlich leistungsfähiger als die Bleiakkumulatoren der 1950er Jahre sind, und mit Brennstoffzellenantrieben, die idealer Weise mit erneuerbarer Energie, direkt oder bei Brennstoffzellen eben mittels aus solcher durch Elektrolyse gewonnenen Wasserstoff, versorgt werden.

Beide Lösungen, nämlich Batterie oder Brennstoffzelle im Triebzug, oder auch, wie in DE102012010365A1 vorgeschlagen, als fest gekuppelter Beiwagen, können aber nicht überzeugen auf Strecken, die bereits zu einem hohen Anteil elektrifiziert (d.h. mit Oberleitung versehen) sind, die aktuell jedoch gleichwohl mit Dieseltriebzügen befahren werden müssen, weil die Oberleitung eben nicht durchgängig auf der Strecke verfügbar ist. Hier ist das "Mitschleppen" der Batterie bzw. der Brennstoffzellenausrüstung auf der gesamten Strecke, obwohl sie nur auf einem (kleineren) nicht elektrifizierten Teil zur Stromversorgung gebraucht wird, weder ökonomisch noch ökologisch sinnvoll. Insbesondere kommt man - je kleiner der Anteil ohne Fahrleitung ist - im Falle von Batterien mit deutlich weniger Batterieeinheiten aus (die dafür dann entsprechend stärker genutzt werden), wenn man die Batterieeinheiten (weitgehend) nur in den nicht elektrifizierten Streckenabschnitten mitführt. Somit kann eine einzelne Batterieeinheit dann gleich für mehrere Züge (in zeitlicher Reihenfolge) den Lückenschluss darstellen. Umgekehrt relativiert sich der genannte Vorteil jedoch bei Strecken mit längeren nicht elektrifizierten Abschnitten, d.h. für solche Strecken kann es grundsätzlich günstiger sein, die Batterien in die Triebfahrzeuge zu integrieren.

Auch "Zweikraftzüge" (also solche mit Diesel- und Elektroantrieb) besitzen auf Strecken mit nur kurzen nicht-elektrifizierten Abschnitten das analoge Problem der hohen Investition (in das Diesel-Aggregat) bei relativ geringer Nutzung,

Es bietet sich daher an, die Energieeinheiten in eigene Wagen ("Akku-Tender") unterzubringen, die an den (Trieb-) Zug (weitgehend) nur für die nicht elektrifizierten Streckenabschnitte angekuppelt werden.

Insbesondere, um das "Flügeln", d.h. die fahrplanmäßige Trennung eines aus mehreren Einheiten verbundenen Zuges zum Erreichen unterschiedlicher Endbahnhöfe und die Wiedervereinigung der Teile bei der Rückfahrt, zu ermöglichen (aber auch das Stärken bzw. Schwächen des Zuges um zusätzliche Einheiten in Abhängigkeit von betrieblichen Anforderungen), haben Triebzüge heutzutage regelmäßig Kupplungen, die ein automatisches und damit schnelles Zusammenkuppeln von einzelnen Einheiten ermöglicht. Gebräuchliche Kupplungen (insbesondere die "Scharfenberg-Kupplung", DE000000149727A und Ableitungen davon) können in aktuellen Ausführungen zwar auch elektrische Verbindungen für vergleichsweise hohe Leistungen anbieten (Verbindung der Zugsammelschiene), diese sind jedoch gleichwohl nicht ausreichend, sprich: dazu geeignet, Traktionsenergie zwischen den Einheiten auszutauschen. Insofern ist auch der erwähnte Lösungsansatz DE102012010365A1 nicht geeignet. Der Hauptgrund dafür liegt in der Beschränkung der Spannung (auf typisch 1000 V, im Vergleich zu 15 oder sogar 25 kV in gängigen Bahn-Oberleitungsnetzen) und damit der Leistung, da die Spannung linear in die Leistung eingeht. Mit dieser (1000 V) ergibt sich bei 2 mal 600 A lediglich eine Maximalleistung von 1,2 MW, was für die Traktionsmotoren nicht ausreichend ist, zumal darüber auch die Nebenverbraucher (insbesondere Heizung und Klimatisierung) gespeist werden müssen. Zum Vergleich: die Motoren eines einzelnen Triebzugs der weit verbreiteten Baureihe 422 der Deutschen Bahn AG haben einen in der Spitze mehr als doppelt so hohen Leistungsbedarf, bei Doppeltraktion fiele dann schon mehr als Faktor 4 der genannten 1,2 MW an.

Wenn umgekehrt, wie in der hier beschriebenen Erfindung, die Übertragung der elektrischen Energie so ausgelegt sein soll, dass auch Spannungen von größer 10 kV sicher beherrschbar sind, müssen die zugehörigen Vorrichtungen von der Anordnung her in einem Bereich liegen, wo der unbeabsichtigte Kontakt zu Menschen ausgeschlossen werden kann. Dies kann nur im Bereich über der (primären) Dachebene sichergestellt werden. Diese wiederum ist an heutigen Triebfahrzeugen aus Gründen der Aerodynamik regelmäßig zurückgezogen, weshalb man hier auch keine passiven Vorrichtungen nutzen kann, die notwendigerweise auch bei Nichtbenutzung über das Profil (nach vorne) hinausragen müssten, was wiederum in Bezug auf die Unfallverhütung sehr problematisch wäre.

Gleichzeitig muss die Vorrichtung (im ausgefahrenen Zustand) aber auch so elastisch sein, dass die bei heutigen Fahrzeuglängen nicht unerheblichen Relativbewegungen zwischen den (elektrisch) zu verbindenden Fahrzeugen aufgefangen werden können.

Alle diese Anforderungen erfüllt die vorgeschlagene Vorrichtung.

Ein weitere Aufgabe, die mit dem Akku-Tender gelöst wird, stellt sich durch das Problem, dass auch bei modernen Batterien das Verhältnis zwischen Masse und speicherbarer (elektrischer) Energie immer noch relativ schlecht ist, insbesondere um Faktoren schlechter als bei fossilen Brennstoffen oder auch bei Wasserstoff. Dies hat bei aktueller Technik eine Beschränkung auf ca. 100 km zur Folge, ab der die Batterietechnik impraktikabel wird. Mit der Wasserstoff-Brennstoffzellentechnik ist umgekehrt zwar eine fossil-freie Energieversorgung von Triebzügen auch für deutlich größere Strecken (aktuell ca, 1.000 km) möglich, jedoch sind die Umwandlungsverluste sowohl bei Erzeugung wie bei Rückumwandlung in Strom derart hoch, dass sowohl Wirtschaftlichkeit wie Ökologie im Vergleich zur Batterielösung sehr viel schlechter ausfallen.

Ein weiterer Vorteil des vorgeschlagenen Akku-Tenders besteht darin, dass man ihn, sobald die in ihm gespeicherte elektrische Energie (weitgehend) an den Triebzug abgegeben ist, was z.B. nach den genannten 100 km der Fall sein könnte, gegen einen frisch geladenen austauschen kann. Auf diese Weise sind dann, auch in Batterie-Technik mit ihrer deutlich höheren Effizienz und entsprechenden hohen Kostenvorteilen, große und sogar beliebig lange oberleitungslose Strecken darstellbar.

### ZUSAMMENFASSUNG DER ERFINDUNG

Es ist Aufgabe der Erfindung, eine Lösung anzugeben, die ein elektromotorisch angetriebenes schienengebundenes Triebfahrzeug auch ohne Kopplung mit einer Oberleitung oder einer Stromschiene mit elektrischer Energie versorgen kann.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein erster Aspekt der Erfindung besteht darin, aus einem an ein Triebfahrzeug kuppelbaren Energieversorgungsfahrzeug elektrische Energie an das Triebfahrzeug zu übertragen. Ein weiterer Aspekt der Erfindung besteht darin, das Energieversorgungsfahrzeug zu betreiben und beispielsweise aus einem elektrischen Stromversorgungsnetz, das auch, aber nicht nur, das Bahnstromnetz sein kann, mit elektrischer Energie zu versorgen.

Die Erfindung bietet den Vorteil, konventionelle elektrisch betriebene schienengebundene Triebfahrzeuge mit auch für die Traktion und sonstige Verbraucher geeigneter elektrischer Energie unabhängig von einer Oberleitung oder Stromschiene zu versorgen. Dieses Triebfahrzeug kann dabei insbesondere eines der Kategorie "Eisenbahn" mit ihren zusätzlichen Anforderungen bezüglich Energiebedarf und Energieart, also konkret Hochvolt-Strom > 10 kV, sein.

Die Erfindung beansprucht ein schienengebundenes, selbst fahrbares Energieversorgungsfahrzeug, das aufweist:
- einen Aufbau,
- mindestens eine im oder am Energieversorgungsfahrzeug angeordnete elektrische Energieliefereinheit, beispielsweise eine Batterie, die ausgebildet ist, ein elektromotorisches Triebfahrzeug mit Traktionsenergie zu versorgen, und
- eine im Dachbereich des Aufbaus, d.h. oberhalb der primären Dachebene, angeordnete Stromkupplungseinheit, die ausgebildet ist, die elektrische Energie aus der Energieliefereinheit an ein elektromotorisches Triebfahrzeug zu übertragen,
- wobei die Stromkupplungseinheit an dem einem Triebfahrzeug zugewandten Ende mindestens einen elektrisch leitfähigen und über eine Positionier-Mechanik per explizitem oder implizitem Steuerbefehl positionierbaren ersten Fangbügel aufweist, der ausgebildet ist, in mindestens einen korrespondierenden ebensolchen zweiten Fangbügel eines Triebfahrzugs zu greifen, so dass eine elektrische Verbindung herstellbar ist, und der umgekehrt bei Nichtbenutzung in den (bei aktuellen Triebfahrzeugen typischerweise zurückgezogenen) Dachbereich zurückpositioniert werden kann. Durch die Fangbügel ist eine sichere und robuste Stromkupplung auf für Spannungen größer 10 kV herstellbar.

In einer Weiterbildung kann der erste Fangbügel trichterförmig, V-förmig oder U - förmig ausgebildet sein.

In einer weiteren Ausgestaltung ist die Positionier-Mechanik der Stromkupplungseinheit elastisch und zudem waagerecht und parallel entlang einer Fahrtrichtungsachse aktiv bewegbar.

In einer Weiterbildung kann die Positionier-Mechanik als eine Hebelmechanik nach dem Prinzip eines Gelenkvierecks oder als linear oder teleskopartig elastisch bewegbare Stange ausgebildet sein.

In einer weiteren Ausprägung kann die Energieliefereinheit mindestens eine wieder aufladbare Batterie und/oder eine Brennstoffzelle aufweisen.

Die Erfindung beansprucht auch eine Verwendung eines erfindungsgemäßen Energieversorgungsfahrzeugs zur Speisung eines schienengebundenen elektromotorischen Triebfahrzeugs mit elektrischer Energie für eine abschnittsweise oberleitungs- und stromschienenfreie Fortbewegung.

Die Erfindung beansprucht außerdem ein Verfahren zum Betrieb eines erfindungsgemäßen Energieversorgungsfahrzeugs, wobei die Stromkupplungseinheit zum Laden des Energieversorgungsfahrzeugs an ein elektrisches Stromnetz, vorzugsweise ein Bahnenergienetz, aber nicht beschränkt auf dieses, angeschlossen wird.

In einer weiteren Ausgestaltung kann das Energieversorgungsfahrzeug autonom fahrend an das Triebfahrzeug angekoppelt werden.

In einer Weiterbildung kann das Energieversorgungsfahrzeug an vorgebbaren Stationen gewechselt werden. Beispielsweise wird an langen oberleitungslosen Strecken im entsprechenden Abstand das dann soweit entladene Energieversorgungsfahrzeug durch Abkuppeln dieses und Ankuppeln eines vollgeladenen Energieversorgungsfahrzeugs ersetzt.

In einer weiteren Ausgestaltung kann in einem ungekuppelten Betriebszustand oder während eines Halts in einem Bahnhof die Stromkupplungseinheit stromlos geschaltet werden.

Die Erfindung beansprucht auch eine Anordnung mit einem erfindungsgemäßen Energieversorgungsfahrzeug und einem schienengebundenen elektromotorischen Triebfahrzeug, wobei das Energieversorgungsfahrzeug an das schienengebundene elektromotorische Triebfahrzeug gekuppelt ist.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- Fig. 1:: eine Seitenansicht eines elektromotorischen Triebfahrzeugs 1, das mit einem Energieversorgungsfahrzeug 2 (inkl. elektrische Energieliefereinheit 3 innerhalb des Aufbaus 7) über konventionelle Kupplungen 6' und 6 gekuppelt ist, jeweils mit ihren Stromkupplungseinheiten 4' und 4, die auf den einander zugewandten Seiten gleichfalls gekuppelt sind
- Fig. 2:: eine perspektivische Aufsicht auf ein Paar von Stromkupplungseinheiten 4 und 4' nach dem Prinzip eines Gelenkvierecks, jeweils halb ausgefahren und bestehend aus Positionier-Mechanik 4b bzw. 4b' und elektrisch leitfähigem Fangbügel 4a bzw. 4a'
- Fig. 3a-e:: je eine perspektivische Aufsicht auf ein Paar Stromkupplungseinheiten 4 und 4' in verschiedenen Ausfahrstufen

### DETAILLIERTE BESCHREIBUNG DER ERFINDUNG

Ein typisches Einsatzszenario sieht folgendermaßen aus: Auf einer nur teilweise mit Oberleitung elektrifizierten Eisenbahnstrecke werden (rein) elektromotorische Triebfahrzeuge (= "Triebzug 1") eingesetzt. Auf den elektrifizierten Teilstrecken fahren sie regulär angedrahtet an der dort vorhandenen Oberleitung. Am letzten Haltepunkt vor einem nicht elektrifizierten Streckenabschnitt steht auf einem Nebengleis das z. B. mit Batterien als elektrischer Energieliefereinheit 3 bestückte und ausreichend geladene Energieversorgungsfahrzeug (= "Akku-Tender 2"), noch in Park-/Ladeposition. Nachdem der Triebzug 1 in den Haltepunkt eingefahren ist, wird die Weiche des Nebengleises derart umgelegt, dass der Akku-Tender 2 in das Gleis des jetzt stehenden Elektro-Triebzuges 1 einschwenken kann. Er fährt sodann autonom bis an dessen Ende heran und kuppelt sich konventionell an, z.B. über eine Scharfenberg-Kupplung 6' bzw. 6. Über diese kann nachfolgend auch eine entsprechend eingeschränkte Stromübertragung (über die integrierte Zugsammelschiene) erfolgen. Sobald diese konventionelle Zusammenkupplung erfolgt ist, können die an sowohl Triebfahrzeug 1 wie insbesondere Akku-Tender 2 angebrachten erfindungsgemäßen Stromkupplungseinheiten 4' und 4 ("Koppeleinheiten") z.B. pneumatisch mit jeweils der Positionier-Mechanik 4b' bzw. 4b soweit ausfahren, bis sie sich in ihren jeweiligen elektrisch leitfähigen Fangbügeln 4a' bzw. 4a treffen und damit diesbezüglich eine (weitere) zunächst lediglich mechanische Verbindung zwischen den Koppeleinheiten herstellen. Im Falle, dass die Fangbügel U - oder V - förmig ausgebildet sind, ist es vorteilhaft, wenn ihre Ebene im 45°-Winkel und, gegen die jeweilige Front des Fahrzeugs schauend, im immer gleichen Drehsinn zur Senkrechten steht, so dass sie jeweils gegeneinander einen 90°-Winkel bilden und damit ideal ineinandergreifen. Falls der Triebzug aus mehreren separaten Einheiten besteht (Mehrfachtraktion), können diese auch eine entsprechende Kopplung über Stromkupplungseinheiten 4"' usw. untereinander aktivieren. In der Folge wird über diese mechanische(n) Verbindung(en) die elektrische Verbindung zwischen den Einheiten 1 und 2 hergestellt, in der Regel durch das Schalten entsprechender Schütze. Um die Gefahr eines Stromschlags zu minimieren, kann dies vorteilhaft erst direkt vor dem Losfahren erfolgen. Über die somit eingerichtete elektrische Verbindung fließt nachfolgend die Traktionsenergie vom Akku-Tender 2 in den Triebzug 1. Der Triebzug 1 kann dann spätestens bei Erreichen des Endes des Oberleitungsabschnittes von der Oberleitung abdrahten und für den folgenden Abschnitt seine elektrische Traktionsenergie vom Akku-Tender 2 beziehen. Dazu gibt es einen Kommunikationspfad zwischen Triebfahrzeug(en) 1 und Akku-Tender 2, mit dem die entsprechenden Aktionen synchronisiert werden. Sobald der Triebzug 1, an dem weiterhin der Akku-Tender 2 als mitfahrende Einheit angekuppelt ist, den nächsten (längeren) Abschnitt mit Oberleitung erreicht hat, typischer Weise wieder an einem Haltepunkt bzw. Bahnhof, kann der Akku-Tender 2 abkoppeln und anschließend, ggf. nach dem Abwarten der Weiterfahrt des Triebzuges 1, autonom auf das dortige Wartegleis fahren, das ggf. auch mit einem Ladepunkt ausgestattet ist. In dieser Position wartet der Akku-Tender 2 sodann auf einen (anderen) Gegenzug 1, mit dem zusammen er wieder an die Ursprungsstation zurückfährt, wobei er sinnvoller Weise auch bei dieser Fahrt für die Traktionsenergieversorgung dieses Gegenzuges benutzt wird.

U.U. können es auch mehrere oberleitungslose Abschnitte in Folge sein, in denen der Akku-Tender 2 "seinem" Triebzug 1 Traktionsenergie gibt, bevor er abkuppelt. Ein solches Szenario ergibt sich z.B. in einem gebirgigen Streckenabschnitt, bei dem einzelne Tunnelabschnitte aufgrund zu engem Querschnitts der Tunnel nicht elektrifiziert sind, die oder einzelne Zwischenabschnitte aber sehr wohl, womit dann Batteriekapazität und Ladungsverluste gespart werden können, bzw. sogar in den elektrifizierten Abschnitten die Batterien zur Reichweitenverlängerung wieder nachgeladen werden können (inverser Stromfluss).

Das An- und Abdrahten des Triebzugs 1 an bzw. von der Oberleitung kann dazu während der Fahrt erfolgen. Idealerweise geschieht dies alles vollautomatisch und ohne Eingriff des Fahrzeugführers, z.B. aufgrund von Satelliteninformationsdaten und/oder optischer Oberleitungsdetektierung.

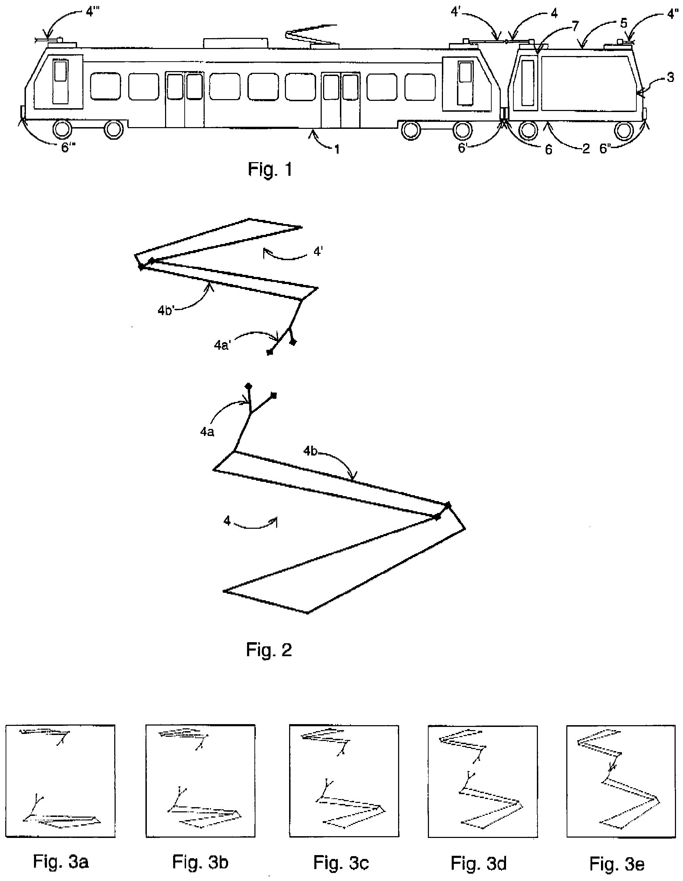

Bei den Zeichnungen zeigt **Figur 1** eine Seitenansicht eines elektromotorischen Triebfahrzeugs 1, das mit einem Energieversorgungsfahrzeug 2 (inkl. elektrische Energieliefereinheit 3 innerhalb des Aufbaus 7) über konventionelle Kupplungen 6' (des Triebfahrzeugs 1) und 6 (des Energiefahrzeugs 2) gekuppelt ist, jeweils mit ihren auf den einander zugewandten Seiten sich befindenden und ausgefahren dargestellten Stromkupplungseinheiten 4' (des Triebfahrzeugs 1) bzw, 4 (des Energiefahrzeugs 2), die gleichfalls gekuppelt sind. 4" und 4"' bezeichnen die (eingefahrenen) Stromkupplungseinheiten, die jeweils ggf. bei Kupplung über die entgegengesetzte Fahrzeugseite zum Einsatz kommen können.

**Figur 2** zeigt eine perspektivische Aufsicht auf ein Paar von Stromkupplungseinheiten 4 und 4', sich befindend z.B. jeweils auf dem Dach eines Energieversorgungsfahrzeugs und eines Triebfahrzeugs, welche in der Figur jedoch nicht dargestellt sind, nach dem Prinzip eines Gelenkvierecks, jeweils halb ausgefahren und bestehend aus Positionier-Mechanik 4b und elektrisch leitfähigem Fangbügel 4a.

Die **Figuren 3 a bis e** zeigen je eine ebensolche perspektivische Aufsicht auf ein Paar Stromkupplungseinheiten 4 und 4' in verschiedenen Ausfahrstufen zwischen ganz eingefahren und sich berührend.

### BEZUGSZEICHENLISTE

- 1: elektromotorisches Triebfahrzeug beinhaltend
4' Stromkupplungseinheit bestehend aus.
4a' elektrisch leitfähiger Fangbügel
4b' Positionier-Mechanik
4'" weitere Stromkupplungseinheit analog zu 4'
6' herkömmliche Kupplung
- 2: Energieversorgungsfahrzeug beinhaltend
3 elektrische Energieliefereinheit
4 Stromkupplungseinheit bestehend aus
4a elektrisch leitfähiger Fangbügel
4b Positionier-Mechanik
4" weitere Stromkupplungseinheit analog zu 4
5 Primäre Dachebene
6 herkömmliche Kupplung
7 Aufbau

## Patentansprüche

1. Schienengebundenes, selbst fahrbares Energieversorgungsfahrzeug (2), **aufweisend:**
- einen Aufbau (7),
- mindestens eine im oder am Energieversorgungsfahrzeug (2) angeordnete elektrische Energieliefereinheit (3), die ausgebildet ist, ein elektromotorisches Triebfahrzeug (1) mit Traktionsenergie zu versorgen, und
- eine im Dachbereich des Aufbaus (7) über der primären Dachebene (5) angeordnete Stromkupplungseinheit (4), die ausgebildet ist, die elektrische Energie aus der Energieliefereinheit (3) an das elektromotorische Triebfahrzeug (1) zu übertragen,
- wobei die Stromkupplungseinheit (4) an dem einem Triebfahrzeug (1) zugewandten Ende mindestens einen elektrisch leitfähigen und über eine Positionier-Mechanik (4b) per Steuerbefehl positionierbaren ersten Fangbügel (4a) aufweist, der ausgebildet ist, ausgefahren in mindestens einen korrespondierenden ebensolchen zweiten Fangbügel (4a') des Triebfahrzugs zu greifen, so dass eine elektrische Verbindung herstellbar ist und der umgekehrt bei Nichtbenutzung in den Dachbereich zurückpositionierbar ist.

2. Energieversorgungsfahrzeug (2) nach Anspruch 1,
**dadurch gekennzeichnet,**
**dass** der erste Fangbügel (4a) trichterförmig, V - förmig oder U - förmig ausgebildet ist.

3. Energieversorgungsfahrzeug (2) nach einem der vorhergehenden Ansprüche,
**dadurch gekennzeichnet,**
**dass** die Positionier-Mechanik (4b) der Stromkupplungseinheit (4) elastisch ist und zudem waagerecht und parallel entlang einer Fahrtrichtungsachse aktiv bewegbar ist.

4. Energieversorgungsfahrzeug (2) nach Anspruch 3,
**dadurch gekennzeichnet,**
**dass** die Positionier-Mechanik (4b) als eine Hebelmechanik nach dem Prinzip eines Gelenkvierecks oder als linear bzw. teleskopartig elastisch bewegbare Stange ausgebildet ist.

5. Energieversorgungsfahrzeug (2) nach einem der vorhergehenden Ansprüche,
**dadurch gekennzeichnet,**
**dass** die Energieliefereinheit (3) mindestens eine wieder aufladbare Batterie und/oder eine Brennstoffzelle aufweist.

6. Verwendung eines Energieversorgungsfahrzeugs (2) nach einem der vorhergehenden Ansprüche zur Speisung eines schienengebundenen elektromotorischen Triebfahrzeugs (1) mit elektrischer Energie zur abschnittsweise oberleitungs- und stromschienenfreien Fortbewegung aus eigener Kraft.

7. Verfahren zum Betrieb eines Energieversorgungsfahrzeugs (2) nach Anspruch 5,
**dadurch gekennzeichnet,**
**dass** die Stromkupplungseinheit (4) zum Laden der elektrischen Energieliefereinheit (3) des Energieversorgungsfahrzeugs (2) an ein elektrisches Stromnetz, insbesondere ein Bahnenergienetz, angeschlossen wird.

8. Verfahren nach Anspruch 7,
**dadurch gekennzeichnet,**
**dass** das Energieversorgungsfahrzeug (2) autonom fahrend an das Triebfahrzeug (1) herangefahren und angekoppelt wird.

9. Verfahren nach Anspruch 7 oder 8,
**dadurch gekennzeichnet,**
**dass** das Energieversorgungsfahrzeug (2) nach mehr oder weniger starker Erschöpfung seiner Ressourcen, insbesondere der Ladung der Batterie, an vorgebbaren Stationen gegen eines mit nicht oder zumindest weniger erschöpften Ressourcen gewechselt wird.

10. Verfahren nach einem der Ansprüche 7 bis 9,
**dadurch gekennzeichnet,**
**dass** in einem ungekuppelten Betriebszustand oder während eines Halts an einem Haltepunkt oder Bahnhof die Stromkupplungseinheit stromlos geschaltet wird und im zweiten Fall eine ggf. notwendige Stromübertragung über die Stromsammelschiene innerhalb der herkömmlichen Kupplungen 6 und 6' erfolgt.

11. Anordnung mit einem Energieversorgungsfahrzeug (2) mit Stromkupplungseinheit (4) nach einem der Ansprüche 1 bis 5 und einem schienengebundenen elektromotorischen Triebfahrzeug (1), wobei das Energieversorgungsfahrzeug (2) an das schienengebundene elektromotorische Triebfahrzeug (1) zum Zwecke der Übertragung von elektrischer Energie über die Stromkupplungseinheit (4) gekuppelt ist.
